# FASCICULE DE BREVET EUROPEEN

(11) **EP 1 626 939 B1**
(45) Date de publication et mention de la délivrance du brevet: **19.12.2018**
(21) Numéro de dépôt: 04742870.1
(22) Date de dépôt: 17.05.2004
(51) Int. Cl.: C03B 23/025, C03B 23/027, G01N 21/896

(54) **BOMBAGE DE VITRAGES PAR GRAVITE SUR UNE MULTIPLICITE DE SUPPORTS**
BIEGEN VON GLASSCHEIBEN MITTELS SCHWERKRAFT MIT HILFE MEHRERER BIEGEFORMEN
CAMBERING OF GLAZING BY GRAVITY ON A MULTIPLICITY OF SUPPORTS

(30) Priorité: 19.05.2003 FR 0305942; 10.07.2003 FR 0308452
(43) Date de publication de la demande: 22.02.2006
(73) Titulaire: SAINT-GOBAIN GLASS FRANCE, 92400 Courbevoie (FR)
(72) Inventeur: CHIAPPETTA, Serge, F-60150 Machemont (FR); EGELE, Guillaume, F-60200 Compiegne (FR)
(74) Mandataire: Saint-Gobain Recherche
(86) Numéro de dépôt international: PCT/FR2004/050198
(87) Numéro de publication internationale: WO 2004/103922

(56) Documents cités:
- EP-A- 0 418 700
- EP-A- 1 097 910
- US-A- 3 003 286
- US-A- 5 146 282
- US-A- 5 167 689
- US-A- 5 660 609

## Description

L'invention concerne un procédé et dispositif de bombage de vitrage par gravité sur au moins deux supports. Les vitrages plus particulièrement concernés sont ceux présentant de fortes concavités selon deux directions orthogonales, c'est-à-dire selon une première direction correspondant à la plus grande dimension du vitrage, désignée par courbure ou bombage longitudinal, et selon une deuxième direction correspondant à la plus petite dimension du vitrage, désignée par courbure ou bombage transversal. Dans le cas d'un pare-brise monté sur une automobile, généralement plus grand en largeur qu'en hauteur, la courbure longitudinale est la courbure horizontale et la courbure transversale est la courbure dans la hauteur. Ces deux concavités selon des lignes orthogonales entre elles sont particulièrement difficiles à réaliser par gravité tout en évitant les défauts suivants: a) un effondrement trop important du verre entre le bord et le centre du vitrage, communément appelé "effet baignoire" ("bath effect" en anglais), b) un bombage localement inversé dans les coins par rapport à celui souhaité, communément appelé "contre-bombage", défaut découlant directement de ce que chaque ligne de concavité est antinomique de celle qui lui est orthogonale, c) un marquage du verre en conséquence de son contact à l'état pâteux avec les outils de bombage.

Le US5660609 enseigne le bombage de feuilles de verre sur deux cadres de bombage portant le verre successivement. Le deuxième cadre à une concavité plus forte que le premier. Ces deux cadres portent tout deux le verre en périphérie. Ce document enseigne que le deuxième cadre est le cadre définitif produisant la forme définitive de la feuille.

Le EP418700 A1 enseigne le bombage de feuilles de verre à la fois sur un cadre périphérique et sur un support venant en contact avec le verre en zone centrale. Ce support en zone centrale retient l'affaissement du verre vers le bas et produit une concavité inverse de celle dans les autres zones du vitrage.

Selon l'invention, il a en effet été découvert que l'on pouvait exercer un effondrement prolongé bien après que la forme périphérique finale du vitrage lui ait été conféré par contact avec le dernier support de bombage par gravité dès lors que la température de bombage était suffisante, ledit effondrement prolongé se traduisant par une augmentation simultanée de flèche et de double-bombage par creusement de la partie centrale du vitrage. Cet effondrement prolongé, rendu possible par une température suffisante, est contrôlé par le refroidissement. Il est de plus apparu que l'effondrement prolongé, combiné à l'utilisation de plusieurs supports de bombage différents, avait un effet multiple: a) il permet l'obtention de concavités plus fortes sans contre-bombage, et de plus, b) cet effondrement prolongé s'accompagne généralement d'une réduction du marquage du verre par les outils de bombage étant venus à son contact. Ce dernier effet notamment est totalement imprévisible car de plus fortes températures impliquent généralement pour l'homme du métier un marquage plus prononcé du fait de la surface plus tendre du verre offerte à l'outil de bombage. L'utilisation de plusieurs lignes de support différentes pour le bombage au cours de l'effondrement par gravité du verre, en combinaison avec un effondrement prolongé réduit le marquage. En effet, le maintien du verre à une température suffisante pour son fluage semble se traduire par un étirement de la peau du vitrage conduisant à une réduction des éventuelles marques créés au préalable. Comme selon l'invention, on exerce un bombage par effondrement sur un premier support suivi d'un effondrement sur un deuxième support, le marquage éventuel issu du premier support tend à s'effacer au moins partiellement dès que le premier support a été substitué par le second, et cela en raison justement de la température nécessaire à la réalisation de l'effondrement prolongé, ledit effondrement prolongé étant lui-même accompagné d'une poursuite de l'effacement.

Selon la présente demande, on appelle vitrage au moins une feuille de verre, voire au moins deux feuilles de verre superposées. L'invention concerne non seulement le bombage d'une feuille de verre individuelle, pouvant être ultérieurement trempée et destinée par exemple à faire office de lunette arrière de véhicule automobile, mais aussi le bombage d'au moins deux feuilles de verre (généralement deux feuilles de verre) devant être ultérieurement assemblées avec une feuille intermédiaire d'un polymère tel que le polyvinylbutyral (PVB) pour réaliser un vitrage feuilleté, notamment un pare-brise de véhicule automobile. Pour ce dernier type de vitrage, on préfère réaliser le bombage des feuilles destinées au même vitrage en les superposant car on leur confère ainsi exactement les même formes. Pour le bombage, on introduit généralement et de façon connue une poudre intercalaire de silice ou de Kieselguhr entre les deux feuilles pour éviter leur collage. Cette poudre est évacuée après le refroidissement et l'on peut alors procéder à leur assemblage avec la feuille intercalaire de PVB.

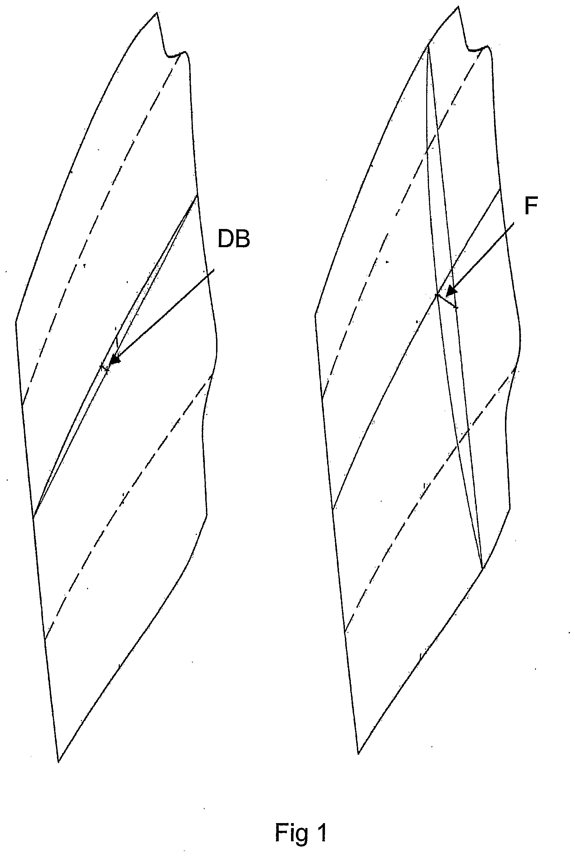

On appelle « flèche », la profondeur de bombage de l'arc le plus long, (généralement le bombage le plus prononcé), qui est égale au segment ayant pour extrémités le milieu dudit arc et le milieu de la corde qui lui correspond (voir la flèche F telle que représentée par la figure 1). On appelle également la courbure dans le sens de l'arc le plus long « courbure longitudinale ». Le bombage selon une direction orthogonale au précédent, appelé double-bombage (« cross-bending » ou « cross-curvature » en anglais), est généralement moins prononcé que le premier. Habituellement, on appelle également « double-bombage » la profondeur de ce bombage transversal formé par l'arc perpendiculaire à l'arc le plus long. Elle est égale au segment ayant pour extrémités le milieu dudit arc et le milieu de la corde qui lui correspond. (voir le double-bombage DB tel que représenté par la figure 1).

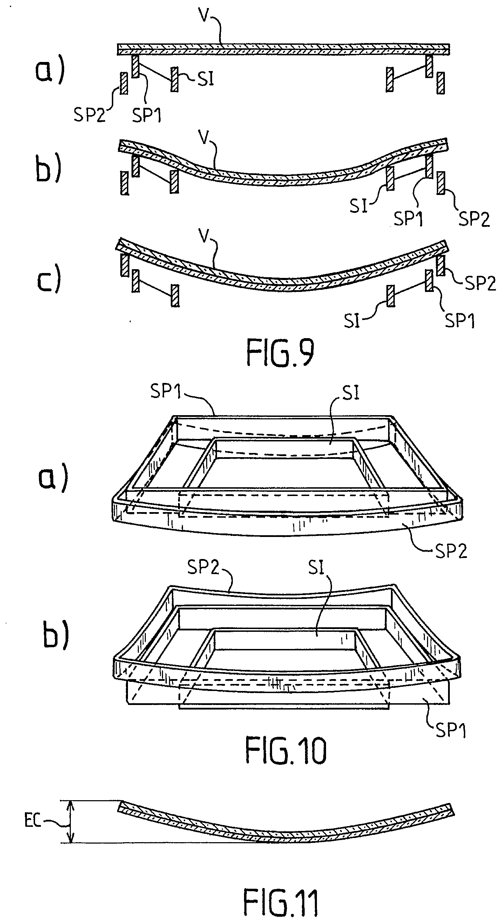

Dans ce qui suit, on appelle effondrement central la différence de hauteur entre le point le plus haut et le point le plus bas du vitrage pendant le bombage alors qu'il est sensiblement à l'horizontale. Le point le plus bas du vitrage se trouve nécessairement dans la région centrale du vitrage. La figure 11 représente sur un vitrage bombé l'effondrement central EC.

Le procédé selon l'invention comprend:
- une première étape de bombage du vitrage par effondrement par gravité sur un premier support lui procurant un premier effondrement central, puis
- une seconde étape poursuivant le bombage du vitrage par effondrement par gravité sur un second support, lui procurant un second effondrement central plus prononcé que le premier et jusqu'à ce que toute la périphérie du vitrage entre en contact avec ledit second support, le vitrage étant à une température suffisante pour que sa partie centrale puisse continuer de s'effondrer après contact de toute la périphérie, puis
- une troisième étape poursuivant le bombage du vitrage par effondrement par gravité lui procurant un troisième effondrement central plus prononcée que le second, la périphérie étant toujours en contact avec ledit second support, puis
- une quatrième étape stoppant par refroidissement l'effondrement du vitrage et lui donnant la forme finale désirée.

Le premier support et le second support comprennent nécessairement un support périphérique pour entrer en contact avec la périphérie du vitrage, ces supports périphériques pouvant être identiques ou différents et même partiellement identiques et différents selon les modes de réalisation de l'invention.

L'effondrement central augmente continuellement dans le procédé selon l'invention de la première à la dernière étape. Selon la présente invention, le second support est un support périphérique. Selon les variantes le premier support peut être du type périphérique ou à la fois périphérique et interne. Le premier et le second support peuvent avoir des parties de lignes de contact communes.

Dans ce qui suit, on distingue une zone périphérique et une zone interne du vitrage à bomber, en ce que la zone périphérique est celle située à moins de 5 cm du bord du vitrage alors que la zone interne est celle située à plus de 5 cm du bord du vitrage. On appelle également « support périphérique » un support venant en contact avec le vitrage dans sa zone périphérique, et « support interne » un support venant en contact avec le vitrage au moins en partie dans sa zone interne. Dans le cas d'un squelette en tant que support interne, généralement au moins 25% et même au moins 50% de la longueur totale de la ligne de contact avec le vitrage se situe en zone interne. Dans le cas d'un squelette en tant que support interne, généralement au moins 50% et même de préférence 100% de la longueur totale de la ligne de contact avec le vitrage se situe à moins de 10 cm du bord du vitrage. On peut donc dire que le support interne ne vient pas au contact du vitrage à plus de 10 cm du bord du vitrage le plus proche au cours du procédé selon l'invention. Il intervient au moins pour une partie de sa longueur (au moins 25% et même au moins 50% de sa longueur) dans la zone (couronne) située entre 5 cm et 10 cm du bord du vitrage.

Les différents supports pouvant être utilisés selon l'invention présentent généralement deux parties ou lignes longitudinales plus longues que deux parties ou lignes transversales. Les deux parties longitudinales supportent les deux côtés les plus longs du vitrage, lesquels apparaissent généralement sensiblement horizontaux sur les véhicules équipés, alors que les deux parties transversales supportent les deux côtés les plus courts du vitrage, lesquels apparaissent généralement sensiblement verticaux sur les véhicules équipés.

Selon un mode de réalisation A le premier support est un support périphérique SP1 et le deuxième support est un autre support périphérique SP2. Ces deux supports sont sous la zone périphérique du vitrage. Le support SP2 se substitue au moins partiellement au support SP1 en passant de la première à la deuxième étape.

Selon une variante A1 du mode A, le support SP2 se substitue entièrement au support SP1 de sorte que lorsque cette substitution est réalisée, le vitrage n'est plus en contact avec aucune partie de SP1. Cette substitution se fait par déplacement vertical relatif de l'un des supports périphériques par rapport à l'autre. En première étape, SP1 est placé au-dessus de SP2 et c'est l'inverse en seconde étape.

Selon une variante A2 du mode A, le support SP2 se substitue partiellement au support SP1 de sorte que lorsque cette substitution est réalisée, le vitrage reste en contact avec une partie de SP1, ce qui signifie également que SP2 comprend une partie de SP1. La substitution partielle se fait par déplacement vertical relatif de parties de SP2 par rapport à SP1. Généralement, ce sont les parties latérales de SP2 qui n'existent pas dans SP1 et qui présentent des courbures plus accentuées et sont placées en deuxième étape en position de travail à un niveau supérieur au niveau des parties latérales du premier support.

Selon un mode de réalisation B, le premier support comprend un support périphérique SP1 et un support interne SI et le deuxième support comprend un support périphérique SP2. Les supports SP1 et SP2 peuvent être identiques ou différents auquel cas ils sont tous deux sous la zone périphérique du vitrage. Le support SP1 et SI interviennent tous deux en première étape, mais peuvent entrer en contact avec le vitrage simultanément ou l'un après l'autre et ils peuvent quitter le vitrage (en fin de première étape) simultanément ou l'un après l'autre.

Selon une variante B1 du mode B, le support SP2 est le même que le support SP1 et le passage de la première à la seconde étape se traduit par le fait que le support SI s'escamote en un mouvement vertical relatif par rapport au support périphérique (par exemple SI va vers le bas, le support périphérique restant à la même hauteur, ou selon un autre exemple, SI reste fixe et le support périphérique monte), le vitrage restant en contact avec SP1, ce dernier ne subissant aucune modification de géométrie. Selon ce mode de réalisation, le support périphérique (SP1 = SP2) a la forme périphérique du vitrage final et donc confère à la périphérie du vitrage ses deux courbures périphériques, c'est-à-dire à la fois la courbure transversale périphérique et la courbure longitudinale périphérique. Le support interne SI n'intervient qu'en première étape en évitant un effondrement trop important et rapide en zone interne lors de la première étape de façon à combattre l'effet baignoire.

Selon une variante B2 du mode B, le support SP2 présente les mêmes éléments matériels que SP1 comme surface de contact pour le vitrage, mais la géométrie de ces éléments matériels a changée entre la première et la seconde étape. SP2 est donc identique à SP1 sauf que s'agissant d'un support articulé, SP1 correspond à sa forme la moins courbée et SP2 correspond à sa forme la plus courbée. Ici, le passage de la première à la seconde étape se traduit par le déplacement vertical de SI vers le bas relativement à SP1/SP2 (cela peut donc être SP1/SP2 qui monte relativement à SI, lequel peut alors être fixe) de façon à lui faire perdre contact avec le vitrage, et par la transformation de SP1 en SP2 par accentuation de sa courbure.

Selon une variante B3 du mode B, le support SP2 se substitue entièrement au support SP1 de sorte que lorsque cette substitution est réalisée, le vitrage n'est plus en contact avec aucune partie de SP1. En seconde étape, il n'y a plus non plus de contact entre le vitrage et le support SI. Le passage de la première étape à la seconde étape se traduit donc par le déplacement vertical relatif de SI vers le bas relativement à SP2 (cela peut donc être SP2 qui monte relativement à SI, lequel peut alors être fixe) de façon à lui faire perdre contact avec le vitrage, et par le remplacement de SP1 par SP2 par un mouvement relatif vertical de l'un par rapport à l'autre, SP2 supportant le vitrage et se retrouvant au dessus de SP1 en seconde étape.

Selon une variante B4 du mode B, le support SP2 se substitue partiellement au support SP1 de sorte que lorsque cette substitution est réalisée, le vitrage reste en contact avec une partie de SP1, ce qui signifie également que SP2 comprend une partie de SP1. En seconde étape, il n'y a plus non plus de contact entre le vitrage et le support SI. Le passage de la première étape à la seconde étape se traduit donc par le déplacement vertical de SI vers le bas relativement à SP1/SP2 (cela peut donc être SP1/SP2 qui monte relativement à SI, lequel peut alors être fixe) de façon à lui faire perdre contact avec le vitrage, et par la substitution partielle par déplacement vertical relatif de parties de SP2 par rapport à SP1. Généralement, ce sont les parties latérales de SP2 qui n'existent pas dans SP1 et qui présentent des courbures plus accentuées et sont placées en deuxième étape en position de travail à un niveau supérieur au niveau des parties latérales du premier support.

Selon l'invention, tout support périphérique est généralement un squelette. Selon l'invention, tout support interne peut être une forme pleine, ou un cadre mais est de préférence un squelette.

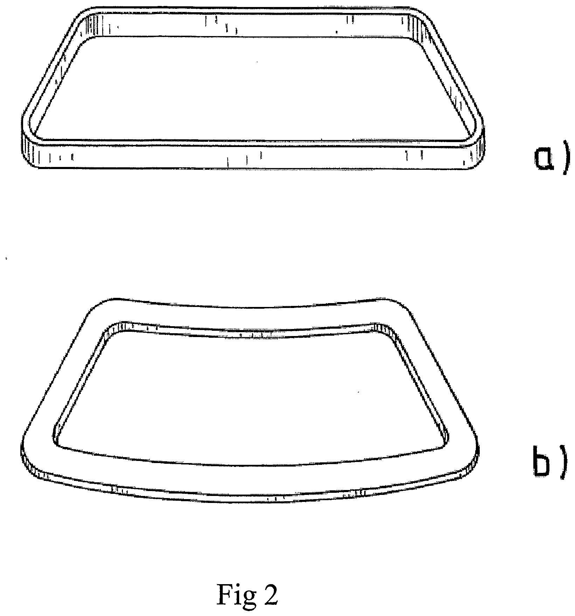

Selon l'invention, on entend par «squelette», une fine bande de métal pouvant être refermée sur elle-même en formant un support sur la tranche supérieure duquel est posée une feuille de verre (voir figure 2a). La tranche a généralement une épaisseur allant de 0,1 à 1 cm. Selon l'invention, on entend par cadre une bande pouvant également se refermer sur elle-même mais offrant comme support non pas sa tranche mais l'une de ses grandes surfaces (voir figure 2b) dont la largeur est généralement comprise entre 1 et 4 cm.

Les supports périphériques sont généralement des lignes continues, en particulier pour la ligne définissant la forme bombée définitive du vitrage, bien qu'une ligne formée de plusieurs points ou segments disposés en des emplacements adéquats puisse également convenir.

Pour les modes de réalisation de l'invention faisant intervenir deux supports périphériques, la ligne périphérique correspondant à la première étape de bombage peut être intérieure ou extérieure à la ligne périphérique correspondant à la seconde étape de bombage.

Selon la présente invention, on préfère les modes de réalisation faisant appel à deux supports périphériques offrant à la périphérie du vitrage deux géométries différentes, le premier lors de la première étape, le second lors de la seconde étape. Ces deux géométries différentes ont pour rôle de conférer progressivement à la périphérie du vitrage sa forme, de façon à éviter le contre-bombage. Ces deux supports périphériques peuvent être entièrement distincts l'un de l'autre, l'un étant disposé à l'intérieur de l'autre, la substitution d'un support par l'autre s'opèrant par exemple soit par une élévation du niveau du deuxième support par rapport au niveau du premier, soit par un abaissement du niveau du premier support, ou encore par la combinaison de ces deux mouvements. En variante, le deuxième support périphérique peut être distinct en parties seulement du premier support. La distinction ou différence peut porter sur les parties latérales des deux lignes. Dans ce cas, la différence consiste généralement en ce que les parties latérales du deuxième support présentent des courbures plus accentuées et sont placées en position de travail à un niveau supérieur au niveau des parties latérales du premier support.

Lorsque deux supports périphériques sont utilisés selon la présente invention, le premier étant utilisé lors de la première étape et le deuxième étant utilisé lors de la seconde étape, généralement le premier support présente en tout endroit une concavité inférieure ou égale à celle du second support au même endroit.

Pour tous les modes de réalisation de l'invention, le premier support comprend un support périphérique offrant de préférence au vitrage une surface assez proche du plan au moins en ce qui concerne les deux côtés longitudinaux. On favorise ainsi la formation du double-bombage lors de la première étape au cours de laquelle il est possible de produire très peu voire pas de flèche. On préfère donc favoriser le double-bombage en première étape et réaliser l'essentiel de la flèche en seconde étape. En pratique, on peut également utiliser en première étape un support périphérique dont toutes les parties (latérales et longitudinales) sont proche du plan, voire parfaitement sur le même plan. Généralement, la surface de ce support ne s'écarte du plan parfait que de moins de 3 cm et de préférence de moins de 2 cm. Dans tous les cas, on préfère que le vitrage puisse dès le début de sa dépose sur ce support périphérique faisant partie du premier support (et avant même le début de son effondrement) en épouser tout le contour, du fait à la fois de sa souplesse, mais également du fait de la faible concavité dudit support périphérique.

Lorsque le support périphérique change de géométrie lors du passage de la première à la seconde étape, par substitution partielle ou totale d'un support périphérique par un autre support périphérique, il peut y avoir localement une perte de contact du vitrage avec tout support en périphérie, un contact sur toute la périphérie étant retrouvé quelques instants après lors de la deuxième étape, sous l'effet de l'effondrement du vitrage.

Lorsque deux supports périphériques sont utilisés, on préfère que le passage de l'un à l'autre soit réalisé en maîtrisant à tout moment l'action des forces s'exerçant sur les parties du vitrage venant au contact du deuxième support périphérique, par réaction de ce deuxième support périphérique au contact du vitrage. Sous un des aspects de l'invention le passage entre les deux supports périphériques s'effectue en équilibrant à tout moment l'action des forces s'exerçant sur des parties symétriques du vitrage venant au contact des supports périphériques.

Dans les modes de réalisation faisant intervenir un support interne, celui-ci n'intervient qu'en première étape en évitant un effondrement trop important et rapide en zone interne lors de la première étape de façon à combattre l'effet baignoire. Le support interne est donc associé à un support périphérique pour constituer le premier support. Les courbures finales souhaitées en zone interne sont conférées progressivement au vitrage au cours des étapes suivant la première. Les éventuelles marques que le support interne a pu laisser à la surface du vitrage lors de la première étape disparaissent lors des étapes suivantes puisque ce support interne n'est plus en contact avec le vitrage. Il a ainsi pu être constaté que l'on pouvait même conduire l'effondrement lors de la première étape de façon à provoquer localement en zone interne par le contact avec le support interne, une courbure inverse de celle souhaitée finalement sans que cela ne se traduise par une présence de marque sur le vitrage final. Au début du procédé de bombage, la feuille de verre encore plane (non encore effondrée) entre en contact avec le support périphérique du premier support et le cas échéant avec le support interne. En effet, en première étape, le support interne peut lui aussi être très proche du plan (écart de moins de 3 cm et même de moins de 2 cm par rapport au plan) et être situé pratiquement à la même hauteur ou légèrement en dessous (écart en hauteur entre le support périphérique et le support interne pouvant aller de 0 mm à 10 mm, notamment de 1 à 8 mm) par rapport au support périphérique auquel il est associé. Selon une variante, le vitrage ne vient pas en contact avec le support interne au début de son contact avec le premier support et ce n'est qu'après un certain effondrement que ce contact a lieu. Le support interne est ensuite retiré en deuxième étape.

L'intégralité du procédé selon l'invention peut être réalisé dans un four dans lequel circulent les supports montés sur des chariots. Notamment, on peut prévoir une zone pour le bombage lui-même et une autre zone pour l'homogénéisation et le refroidissement. La zone pour l'homogénéisation et le refroidissement peut par exemple être portée à une température inférieure au four de bombage d'environ 50 à 120°C.

A partir du moment où la périphérie du vitrage est entièrement en contact avec le dernier support périphérique, on peut laisser se poursuivre l'effondrement de façon à ce que l'effondrement central augmente encore de 1 à 10 mm, et plus généralement 2 à 8 mm. Cette progression se fait au cours des 3^{ème} et 4^{ème} étapes, jusqu'à ce que le refroidissement soit suffisant pour fixer la géométrie du vitrage.

Dans le cas de l'utilisation d'un support interne, la température de ce support est généralement au moins égale à celle des supports périphériques, entre le commencement de l'affaissement du vitrage à la première étape, et au moins jusqu'au moment du passage de la troisième à la quatrième étape.

Dans le cas d'un vitrage feuilleté, on préfère que le refroidissement s'effectue à la vitesse de 0,5 à 1°C/sec, et de manière encore préférée soit inférieur à 0,8°C/sec.

La première étape dure généralement de 5 à 20 min. Le temps de contact du vitrage avec l'éventuel support interne est généralement inférieur d'au moins 1 min à la durée de la première étape. La seconde étape dure généralement de 10 à 100 sec. La troisième étape dure généralement de 5 à 30 sec.

La température de bombage est généralement comprise entre 590 et 670 °C. De préférence on exerce un gradient de température entre le centre du vitrage et sa périphérie d'au moins 10°C, par exemple entre 10 et 60°C, le centre du vitrage étant plus chaud que la périphérie. Un tel gradient combat également l'effet baignoire.

L'utilisation d'un support interne est visible sur le vitrage final car l'on distingue en ombroscopie une ligne de contraste à l'endroit où se situait le support interne. On peut aussi généralement distinguer cet endroit par réflexion sous une mire quadrillée. Ainsi, l'invention permet également la réalisation d'un vitrage feuilleté bombé selon deux directions orthogonales dont au moins l'une des feuilles présente en ombroscopie ou reflexion une ligne en zone interne.

On peut également bomber un vitrage par effondrement sur un squelette muni d'un support interne qui n'est pas escamoté avant le refroidissement. Dans ce cas, on peut distinguer une modification de l'état de contrainte du verre à l'endroit où le support interne était présent par la technique dite de polariscopie ou par un épibiascope. Pour mettre en oeuvre un tel procédé, on peut par exemple utiliser un squelette comprenant un support périphérique SP et un support interne SI, ces deux supports étant fixes l'un par rapport à l'autre. On pose le vitrage sur le support SP et du fait de l'effondrement, le verre vient à entrer en contact avec le support SI. On procède alors au refroidissement, le vitrage étant en contact avec les deux supports SP et SI.

Les techniques de polariscopie ou par un épibiascope ne permettent généralement pas de distinguer l'endroit ou le support interne était présent dans les modes de réalisation pour lesquels le support interne a été escamoté avant le début du refroidissement.

On préfère que le support interne soit escamoté avant refroidissement, notamment pour les vitrages particulièrement bombés.

Dans le cadre de l'invention, le passage d'un support à l'autre peut être rapide ou lent. Suivant le cas, de façon à éviter le déplacement latéral du vitrage ou sa rupture sous l'effet d'un changement trop brusque de support, on peut être amené à rechercher un passage progressif et contrôlé d'un support à l'autre.

Le passage d'un support à l'autre peut être commandé grâce à un système mécanique traversant les parois du four et venant appuyer en un endroit donné du four sur des cibles portées par le dispositif de bombage selon l'invention. L'appui sur ces cibles par exemple par l'intermédiaire de vérins hydrauliques, déclenche le passage d'un support à l'autre. Chaque dispositif de bombage peut comprendre par exemple deux cibles placés sur deux de ses côtés.

Les support utilisés dans le cadre de l'invention sont de préférence revêtus d'un intercalaire adapté au contact du verre chaud. Cet intercalaire peut généralement être en un tissu de fibres réfractaires (métal inoxydable, céramique, etc). Un tel intercalaire équipe généralement au moins le dernier support du vitrage. Dans le cas de l'utilisation d'un support interne, on préfère également équiper celui-ci d'un tel intercalaire.

Le procédé selon l'invention est particulièrement adapté à la réalisation de vitrages présentant le même type de concavité en tous ses points, c'est-à-dire partout concave d'un côté et partout convexe de l'autre côté. Le vitrage final présente donc le même type de concavité en tout point de chaque surface principale.

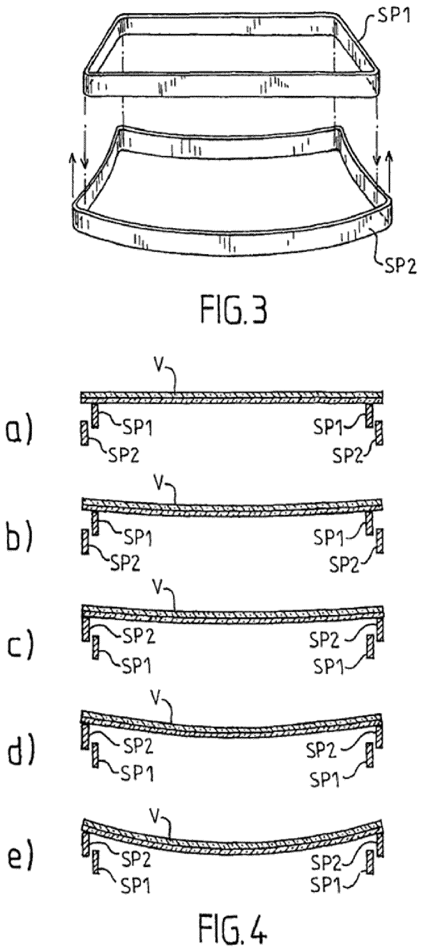

La figure 3 représente schématiquement deux supports périphériques SP1 et SP2 utilisables dans le cadre du mode de réalisation A1. Les flèches représentent le mouvement relatif vertical des deux supports lors du passage de la première à la seconde étape. Ici, ce mouvement est réalisé par passage de SP1 à l'intérieur de SP2. On a représenté SP2 avec des courbures plus prononcées en tous endroits, c'est-à-dire à la fois pour les lignes transversales et les lignes longitudinales.

La figure 4 représente la succession des étapes lors de la réalisation du mode A1. Deux feuilles de verre superposées reposent d'abord planes sur le support SP1 en a). Elles se creusent tout au long du processus de bombage par gravité de a) à e). En c), le support SP2 est substitué au support SP1. Le contour du vitrage touche entièrement le support SP2 en d) et continue de se creuser en e).

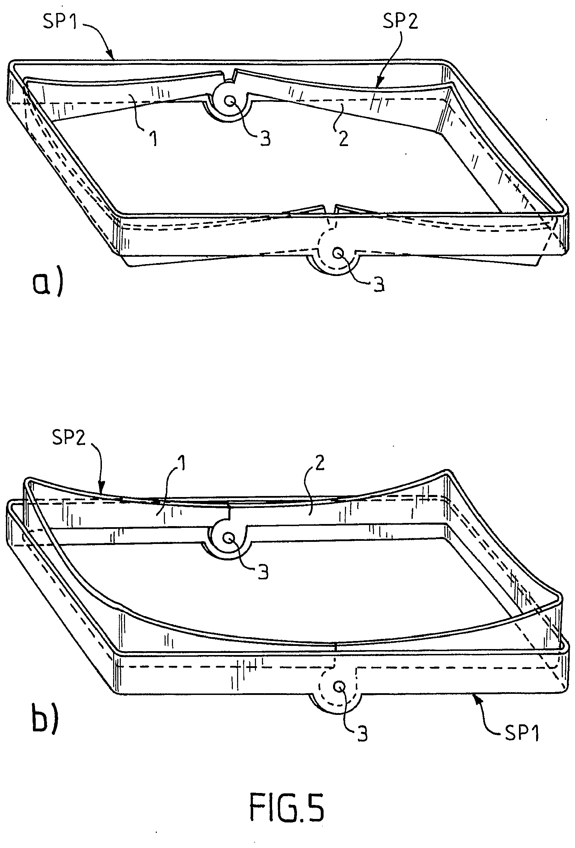

La figure 5 représente un dispositif de bombage selon le mode A1. Ce dispositif pourrait être monté sur un chariot pourvu de roues pour se déplacer sur des rails à travers un four de bombage par gravité (non représentés). Ce dispositif comprend deux supports de bombage : un premier support SP1 et un deuxième support SP2 procurant la forme de bombage définitive. Ce dernier est ici formé de deux demi-supports 1 et 2, les deux parties symétriques 1 et 2 étant reliées entre-elles par les articulations 3. Le premier support et les deux demi-supports 1 et 2 formant le support définitif sont disposés de façon telle que le support SP1 est situé à un niveau supérieur lors de la première étape de bombage. Ainsi, dans cette position, une feuille de verre posée sur le premier support SP1 ne vient pas au contact des demi-supports 1 et 2. Dans le four de bombage (non représenté) est prévue une station de transfert de la feuille de verre prébombée en forme d'ébauche pour la transférer du premier support SP1 au deuxième support SP2. Les deux demi-supports 1 et 2 basculent simultanément vers le haut prenant alors le relais de SP1 pour supporter le vitrage. Dans la position de travail du support définitif SP2, le vitrage repose sur SP2 et ne touche plus SP1.

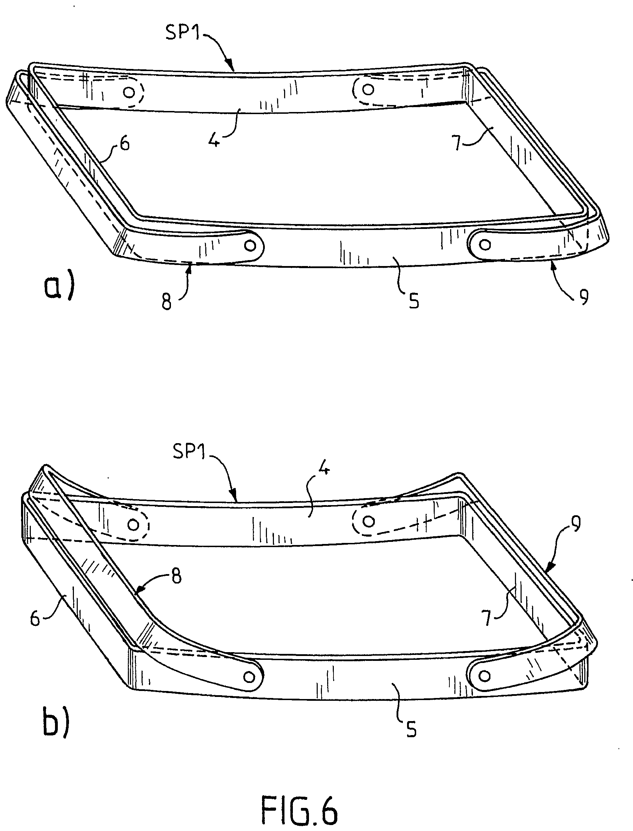

Sur la figure 6, on a représenté un dispositif du type A2, comprenant un support fixe SP1. Ce support fixe peut être monté sur un chariot (non représenté) de façon à pouvoir le convoyer à travers un four de bombage. Ce support fixe SP1 est formé de deux parties longitudinales 4 et 5 et de deux parties transversales 6 et 7. Le support SP2 intervenant en seconde étape (figure 6b) comprend une partie du support SP1, à savoir partiellement les deux parties longitudinales 4 et 5, et deux parties transversales 8 et 9 qui sont montées pivotantes autour d'axes horizontaux. Le vitrage est placé horizontalement sur le cadre fixe alors que le dispositif est en position selon la figure 6 a). La première étape de bombage procurant la première forme se déroule sur le cadre fixe. La seconde étape de bombage procurant la forme définitive s'effectue alors que le dispositif est dans la configuration selon la figure 6 b).

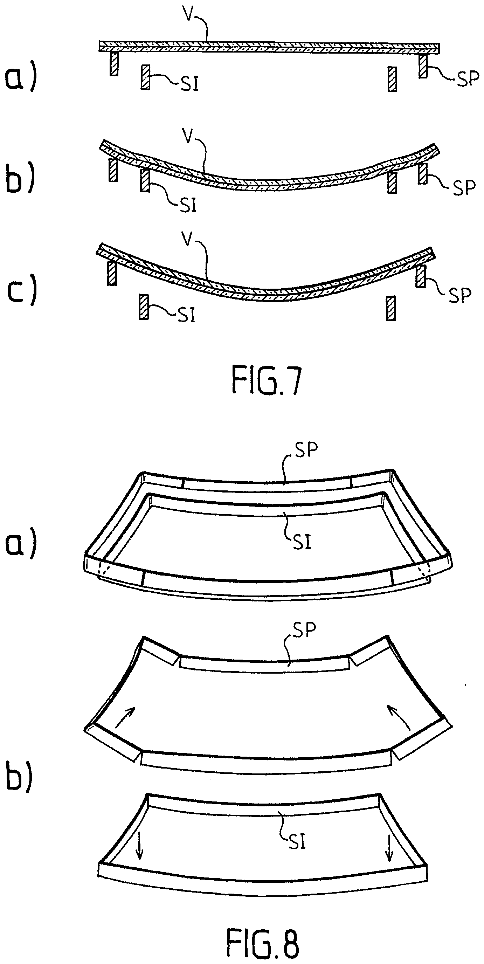

La figure 7 représente les séquences du mode B1 pour lequel le premier support comprend à la fois un support périphérique SP fixe (géométrie invariable) et un support interne SI et le second support ne comprend qu'un support périphérique SP totalement identique au support périphérique du premier support. Quand le vitrage v (ici deux feuilles de verre superposées) est posé sur le premier support, il ne touche au début que le support périphérique en a), puis s'effondre et touche le support interne SI, lequel évite un effondrement trop important et provoque même une légère inversion de concavité localement en b) sur la figure 7. Pour la deuxième étape, le support interne est escamoté vers le bas relativement à SP et n'est plus en contact avec le vitrage. Celui-ci continue de se bomber.

La figure 8 représente des séquences du mode B2 pour lequel le premier support comprend à la fois un support périphérique SP et un support interne SI et le second support ne comprend qu'un support périphérique SP constitué des mêmes éléments matériels que le support périphérique du premier support mais avec une géométrie différente. Le support SP est ici un squelette articulé, déployé en première étape (figure 8a) et replié en seconde étape (figure 8b). Lors de la première étape, quand le vitrage est posé (plan) sur le premier support, il ne touche au début que le support périphérique à l'état déployé, puis s'effondre et touche le support interne SI, lequel évite un effondrement trop important et peut même provoquer une légère inversion de concavité localement, comme dans le mode de réalisation précédent. Pour la deuxième étape, le support interne est escamoté vers le bas relativement à SP et n'est plus en contact avec le vitrage, et les bras latéraux du support SP sont repliés imposant un plus fort bombage au vitrage, qui continue par ailleurs de se bomber en sa partie centrale.

Les figures 9 et 10 représentent des séquences du mode B3 pour lequel le premier support comprend à la fois un support périphérique SP1 et un support interne SI et le second support ne comprend qu'un support périphérique SP2. Les supports SP1 et SI sont reliés ensemble (liaison non représentée sur la figure 10), SI se trouvant un peu plus bas que SP1. Au début lorsque le vitrage est posé, il ne touche que le support périphérique SP1 (figure 9a). En se bombant par gravité, il vient ensuite à toucher SI, lequel évite un effondrement trop important et peut même provoquer une légère inversion de concavité localement, comme dans les deux modes de réalisation précédents (figure 9b). Pour la seconde étape, le premier support est escamoté vers le bas (flèches sur la figure 10 b) relativement à SP2 tant pour le support périphérique SP1 que le support interne SI, et le vitrage ne repose plus que sur le support périphérique SP2 (figure 9c). Le vitrage prend la forme périphérique de SP2 et continue de se creuser dans sa région centrale (étapes 3 et 4).

## Revendications

1. Procédé de bombage d'un vitrage (V) comprenant
- une première étape de bombage du vitrage par effondrement par gravité sur un premier support (SP1, SI, SP) lui procurant un premier effondrement central, puis
- une seconde étape poursuivant le bombage du vitrage par effondrement par gravité, sur un second support (SP2, SP), lui procurant un second effondrement central plus prononcé que le premier et jusqu'à ce que toute la périphérie du vitrage entre en contact avec ledit second support (SP2, SP), le vitrage étant à une température suffisante pour que sa partie centrale puisse continuer de s'effondrer après contact de toute la périphérie, puis
- une troisième étape poursuivant le bombage du vitrage par effondrement par gravité lui procurant un troisième effondrement central plus prononcé que le second, la périphérie étant toujours en contact avec ledit second support (SP2, SP), puis
- une quatrième étape stoppant par refroidissement l'effondrement du vitrage et lui donnant la forme finale désirée.

2. Procédé selon la revendication précédente **caractérisé en ce que** le premier support comprend un support périphérique SP1 et le deuxième support comprend un support périphérique SP2, ce dernier présentant au moins partiellement une concavité supérieure à celle de SP1.

3. Procédé selon la revendication précédente **caractérisé en ce que** le support SP2 présente en tout endroit une concavité supérieure à celle de SP1.

4. Procédé selon l'une des revendications précédentes, **caractérisé en ce que** SP2 et SP1 sont totalement distincts.

5. Procédé selon l'une des revendications précédentes **caractérisé en ce que** le premier support comprend un support interne SI et **en ce que** lors de la première étape, le vitrage vient d'abord en contact avec SP1 puis, après un certain effondrement, avec SI.

6. Procédé selon la revendication précédente **caractérisé en ce que** SI est sous SP1 d'une hauteur jusqu'à 10 mm.

7. Procédé selon l'une des revendications précédentes **caractérisé en ce que** le premier support comprend un support interne SI, ledit support interne SI retenant l'effondrement du verre pour provoquer localement et momentanément une concavité inverse de la concavité finale du vitrage au même endroit.

8. Procédé selon l'une des revendications 5 à 7 **caractérisé en ce que** le support interne (SI) est escamoté avant le refroidissement.

9. Procédé selon la revendication précédente **caractérisé en ce que** le support interne (SI) n'est plus en contact avec le vitrage après la première étape.

10. Procédé selon l'une des revendications 5 à 9, **caractérisé en ce que** le support interne (SI) ne vient pas au contact du vitrage à plus de 10 cm du bord le plus proche.

11. Procédé selon l'une des revendications 5 à 10, **caractérisé en ce que** le support interne (SI) intervient au moins pour une partie de sa longueur dans la zone située entre 5 cm et 10 cm du bord du vitrage.

12. Procédé selon l'une des revendications 5 à 11, **caractérisé en ce que** le support interne (SI) est un squelette.

13. Procédé selon l'une des revendications précédentes **caractérisé en ce que** tout support périphérique est un squelette.

14. Procédé selon l'une des revendications précédentes **caractérisé en ce que** l'effondrement central augmente de 1 à 10 mm après la fin de la deuxième étape.

15. Procédé selon l'une des revendications précédentes, **caractérisé en ce que** le vitrage (V) comprend au moins deux feuilles de verre superposées.

## Patentansprüche

1. Verfahren zum Wölben einer Verglasung (V), das Folgendes umfasst
- einen ersten Schritt des Wölbens der Verglasung durch schwerkraftbedingtes Absacken auf einen ersten Träger (SP1, SI, SP), der ihr eine erste zentrale Absackung verleiht, dann
- einen zweiten Schritt, der das Wölben der Verglasung durch schwerkraftbedingtes Absacken auf einen zweiten Träger (SP2, SP) fortsetzt, der ihr ein zweites zentrales Absacken verleiht, das ausgeprägter ist als das erste und bis der gesamte Umfang der Verglasung mit dem zweiten Träger (SP2, SP) in Berührung tritt, wobei die Verglasung auf einer Temperatur ist, die ausreicht, damit ihr zentraler Teil nach Berührung des gesamten Umfangs weiterhin absacken kann, dann
- einen dritten Schritt, der das Wölben der Verglasung durch schwerkraftbedingtes Absacken fortsetzt, der ihr ein drittes zentrales Absacken verleiht, das ausgeprägter ist als das zweite, wobei der Umfang immer noch mit dem zweiten Träger (SP2, SP) in Berührung ist, dann
- einen vierten Schritt, der das Absacken der Verglasung durch Kühlen stoppt und ihr die gewünschte abschließende Form verleiht.

2. Verfahren nach dem vorhergehenden Anspruch, **dadurch gekennzeichnet, dass** der erste Träger einen umfänglichen Träger SP1 umfasst und der zweite Träger einen umfänglichen Träger SP2 umfasst, wobei dieser Letztere mindestens teilweise eine Konkavität, die größer ist als die von SP1, aufweist.

3. Verfahren nach dem vorhergehenden Anspruch, **dadurch gekennzeichnet, dass** der Träger SP2 überall eine Konkavität größer als die von SP1 aufweist.

4. Verfahren nach einem der vorhergehenden Ansprüche, **dadurch gekennzeichnet, dass** SP2 und SP1 völlig getrennt sind.

5. Verfahren nach einem der vorhergehenden Ansprüche, **dadurch gekennzeichnet, dass** der erste Träger einen internen Träger SI umfasst, und dass beim ersten Schritt die Verglasung zuerst mit SP1 in Berührung kommt, und dann, nach einem bestimmten Absacken, mit SI.

6. Verfahren nach dem vorhergehenden Anspruch, **dadurch gekennzeichnet, dass** SI um eine Höhe bis 10 mm unter SP1 liegt.

7. Verfahren nach einem der vorhergehenden Ansprüche, **dadurch gekennzeichnet, dass** der erste Träger einen internen Träger SI umfasst, wobei der interne Träger SI das Absacken des Glases zurückhält, um lokal und vorübergehend eine umgekehrte Konkavität der abschließenden Konkavität der Verglasung an derselben Stelle hervorzurufen.

8. Verfahren nach einem der Ansprüche 5 bis 7, **dadurch gekennzeichnet, dass** der interne Träger (SI) vor dem Kühlen eingezogen wird.

9. Verfahren nach dem vorhergehenden Anspruch, **dadurch gekennzeichnet, dass** der interne Träger (SI) nach dem ersten Schritt mit der Verglasung nicht mehr in Berührung ist.

10. Verfahren nach einem der Ansprüche 5 bis 9, **dadurch gekennzeichnet, dass** der interne Träger (SI) mit der Verglasung mehr als 10 cm vom nächstliegenden Rand nicht in Berührung kommt.

11. Verfahren nach einem der Ansprüche 5 bis 10, **dadurch gekennzeichnet, dass** der interne Träger (SI) für mindestens einen Teil seiner Länge in der Zone eingreift, die zwischen 5 cm und 10 cm vom Rand der Verglasung liegt.

12. Verfahren nach einem der Ansprüche 5 bis 11, **dadurch gekennzeichnet, dass** der interne Träger (SI) ein Gestell ist.

13. Verfahren nach einem der vorhergehenden Ansprüche, **dadurch gekennzeichnet, dass** der gesamte umfängliche Träger ein Gestell ist.

14. Verfahren nach einem der vorhergehenden Ansprüche, **dadurch gekennzeichnet, dass** das zentrale Absacken nach dem Ende des zweiten Schritts von 1 bis 10 mm zunimmt.

15. Verfahren nach einem der vorhergehenden Ansprüche, **dadurch gekennzeichnet, dass** die Verglasung (V) mindestens zwei übereinanderliegende Glasscheiben umfasst.

## Claims

1. A process for bending a glass panel (V), comprising:
- a first step of bending the glass panel by making it sag under gravity on a first support (SP1, SI, SP), giving it a first central sag; then
- a second step, which continues the bending of the glass panel by sagging under gravity, on a second support(SP2, SP), giving it a second central sag more pronounced than the first one and until the entire periphery of the glass panel comes into contact with said second support (SP2, SP), the glass panel being at a temperature high enough for its central part to be able to continue to sag after contact of its entire periphery; then
- a third step, continuing the bending of the glass panel by sagging under gravity, giving it a third central sag more pronounced than the second, the periphery still being in contact with said second support(SP2, SP); and then
- a fourth step in which the sagging of the glass panel is stopped by cooling it, giving it the desired final shape.

2. The process as claimed in the preceding claim, **characterized in that** the first support comprises a peripheral support SP1 and the second support comprises a peripheral support SP2, the latter having at least partially a concavity greater than that of SP1.

3. The process as claimed in the preceding claim, **characterized in that** the support SP2 has at all points a concavity greater than that of SP1.

4. The process as claimed in one of the preceding claims, **characterized in that** SP2 and SP1 are completely separate.

5. The process as claimed in one of the preceding claims, **characterized in that** the first support comprises an internal support SI and **in that** during the first stage, the glazing element comes initially into contact with SP1, then, after a certain sag, with SI.

6. The process as claimed in the preceding claim, **characterized in that** SI is up to 10 mm below SP1.

7. The process as claimed in one of the preceding claims, **characterized in that** the first support comprises an internal support SI, said internal support SI holding the sag of the glass to cause, locally and momentarily, a concavity that is the inverse of the final concavity of the glass panel at the same point.

8. The process as claimed in one of claims 5 to 7, **characterized in that** the internal support (SI)_ is moved away before the cooling.

9. The process as claimed in the preceding claim, **characterized in that** the internal support (SI) is no longer in contact with the glass panel after the first step.

10. The process as claimed in one of claims 5 to 9, **characterized in that** the internal support (SI) does not come into contact with the glass panel over more than 10 cm from the closest edge.

11. The process as claimed in one of claims 5 to 10, **characterized in that** the internal support (SI) comes into play, at least for part of its length, in the region lying between 5 cm and 10 cm from the edge of the glass panel.

12. The process as claimed in one of claims 5 to 11, **characterized in that** the internal support (SI) is a skeleton.

13. The process as claimed in one of the preceding claims, **characterized in that** any peripheral support is a skeleton.

14. The process as claimed in one of the preceding claims, **characterized in that** the central sag increases from 1 to 10 mm after the end of the second step.

15. The process as claimed in one of the preceding claims, **characterized in that** the glass panel (V) comprises at least two superimposed glass sheets.
